# EUROPEAN PATENT SPECIFICATION

(11) **EP 0 605 574 B1**
(45) Date of publication and mention of the grant of the patent: **29.05.1996**
(21) Application number: 92920564.9
(22) Date of filing: 01.09.1992
(51) Int. Cl.: A23L 3/22

(54) **ARRANGEMENT IN A REGENERATIVE HEAT EXCHANGER**
VORRICHTUNG FÜR EINEN REGENERATIV-WÄRMEAUSTAUSCHER
AGENCEMENT POUR UN ECHANGEUR DE CHALEUR A REGENERATION

(30) Priority: 16.09.1991 SE 9102669
(43) Date of publication of application: 13.07.1994
(73) Proprietor: ALFA-LAVAL AGRICULTURE INTERNATIONAL AB, S-147 21 Tumba (SE)
(72) Inventor: LIDMAN, Magnus, S-144 64 Rönninge (SE)
(74) Representative: Lerwill, John
(86) International application number: SE9200600
(87) International publication number: WO9305667

(56) References cited:
- EP-A- 0 506 646
- DE-A- 4 025 570
- GB-A- 417 029
- GB-A- 1 188 164

## Description

The present invention relates to an apparatus including a regenerative heat exchanger for heat treatment of liquid food products, the food product being heated for a predetermined time and temperature in a holding cell between a final heating stage and a regenerative section in the heat exchanger.

When heat treating liquid food products one desires to achieve as good heat economy as possible. This is especially the case when heat treating at higher temperatures. The heat energy in already heat treated product is used to preheat product which has not been treated. This is usually attained in that untreated food product in a first section of a heat exchanger, the regenerative section, is heated by already treated product which is cooled simultaneously.

In a second section in the heat exchanger, the final heating step, the food product is heated by a heat transferring medium to a desired temperature. If the intention of the heat treatment is a pasteurization of the food product, that is a killing of dangerous micro-organisms, the food product must be kept at a prescribed temperature for a pre-determined time. Usual combinations are pasteurization at 72-75° C for at least 15 seconds, or pasteurization at 80° C for 3-5 seconds. The necessary holding time is achieved by the food product being passed through a holding cell, for example in the shape of a tube coil, the length of which corresponds to the holding time when the arrangement is used at its maximum capacity.

The heat treated product is as mentioned above cooled by incoming product. If the product is to be kept cool after the heat treatment, a separate cooling step is performed after the heat exchanger, where the treated product is cooled with a cooling medium far example cold water or ice water.

The handling of food products is strictly controlled by rules and regulations from the authorities. As regards milk, dairy organizations have also compiled rules. These rules mainly aim at ensuring that the food product cannot leave the heat exchanger without being sufficiently heat treated.

In order to prevent this from happening, the heat exchanger is provided with a three-way valve which returns the food product to the inlet of the heat exchanger if the temperature of the food product is too low at the outlet from the holding cell. The function of the three-way valve is controlled with a temperature recorder which also registers the position of the valve. In dairy plants compressed air is used to control the valves which gives a rapid and distinct switchover.

When pasteurizing on a small scale, a regenerative heat treatment is more advantageous from many points of view than, for example heating batches of the same amount of product. To use the same kind of control arrangement as in large dairy plants may, however, be unacceptably expensive. Compressed air control demands both use of a compressor and maintenance of the same, which in a small scale plant is expensive and constitutes a complicating factor. Other solutions to the problem of finding a suitable valve may involve different disadvantages. Valves which are actuated by way of a magnet cannot take care of the large amounts of flow which are handled during the heat treatment. Valves driven by motors react too slowly to be used in these connections where the time from sensing an incorrect temperature to adjustment of the valve must be kept as short as possible.

Thus, the invention aims at a simple arrangement which can reliably ensure that product which has been heat treated to an unsufficient degree cannot leave through the outlet of the heat treatment apparatus.

According to the invention, an apparatus as initially described is characterized in that a three-way valve is arranged at the outlet from the holding cell, which three-way valve is reversible between a stable rest position in which the food product is returned to the inlet of the heat exchanger and an operating position in which the food product is directed to the regenerative section of the heat exchanger, and the three way valve has a valve body arranged to be moved manually to the operating position and to be kept in this position by the pressure of the food product having passed through the valve.

The pressure of the food product is conveniently maintained by way of a pump arranged in front of the inlet to the final heating step. In some connections the pressure which is obtained by the pump which transports the food product to the inlet of the heat exchanger may be sufficient to achieve a sufficiently high pressure at the outlet of the holding cell.

A booster pump can be arranged between the regenerative section and the final heating step.

A temperature sensing means is usually arranged at the outlet from the holding cell, which means senses the temperature of the food product and, if it is too low, causes the pump to stop. The pressure of the food product then falls and the valve body automatically returns to its rest position so that the food product is directed back to the inlet of the heat exchanger. With such an arrangement insufficiently heat treated milk is prevented from flowing through the outlet section of the regenerative part and contaminating the same. The heat exchange areas in this section have a temperature which is lower than the pasteurizing temperature and if dangerous microorganisms enter this section they are not killed at a later stage when the prescribed pasteurizing temperature is obtained again in the holding cell.

With an apparatus according to the invention it is also ensured that the valve body of the three-way valve returns to its rest position if there is a power failure. If such a failure occurs, the pump stops so that the pressure of the food product diminishes and the valve body returns to its rest position. If the power returns the food product is returned to the inlet of the heat exchanger until the desired temperature has been obtained at the downstream end of the holding cell.

The temperature sensing means is advantageously designed such that the sensed temperature also is registered continuously. The demand from the authorities that the effect of the heat treatment shall be documented is then fulfilled.

It is also suitable to provide the three-way valve with means which senses the position of the valve body, which means, when the valve body is returned to its rest position, can be arranged to see to that the pump starts to work again. In this way all problems with fouling deposits in the final heating stage are avoided since the food product continues to flow through the final heating step and the holding cell. However, the food product is not allowed to leave the heat exchanger, but is returned to the inlet of the heat exchanger as long as the temperature of the food product remains lower than the prescribed value at the outlet from the holding cell. When the desired temperature has been obtained once again, the valve body is moved manually to its operating position and the food product is brought to pass the regenerative part in order to be cooled in the same.

For enhanced reliability, the position sensing means may be arranged to stop the pump if the valve body of the three-way valve is moved manually to its operation position before the desired temperature of the food product has been achieved.

The mentioned position sensing means are with advantage arranged to indicate the position of the valve body. The position of the valve body is suitably registered when there is a simultaneous registration of the temperature of the food product at the outlet from the holding cell.

In order to avoid any possibility of insufficiently heat treated product, when returned to the inlet by the valve, leaking past the valve body, rules in some countries regarding pasteurization demand the presence of means for a special draining of leakage. When such demands are to be met, two three-way valves can be connected in series. Correctly heat treated product passes both the valves on the way to the regenerative section. If the heat treatment is insufficient the first three-way valve returns the food product to the inlet. Should any product pass the valve body in this first three-way valve due to a leakage, the second three-way valve prevents the food product passing on to the regenerative section.

The two valve bodies may be moved independently of each other. Both return to the rest position when the pump stops and the pressure of the food product falls. The valve bodies may also be connected mechanically in order to secure a simultaneous movement.

In order to prevent any possibility of food product which has not been heat treated entering and mixing with heat treated product if a leakage occurs in the regenerative section, a pressure regulating valve is preferably at the outlet from the regenerative section of the heat exchanger to ensure a desired high pressure level of the heat treated product. If a leakage occurs heat treated product enters into and is mixed with untreated product. If the desired high pressure level can not be obtained in the regenerative section, means may be arranged to see that the valve body of the three-way valve is not kept in operatiing position.

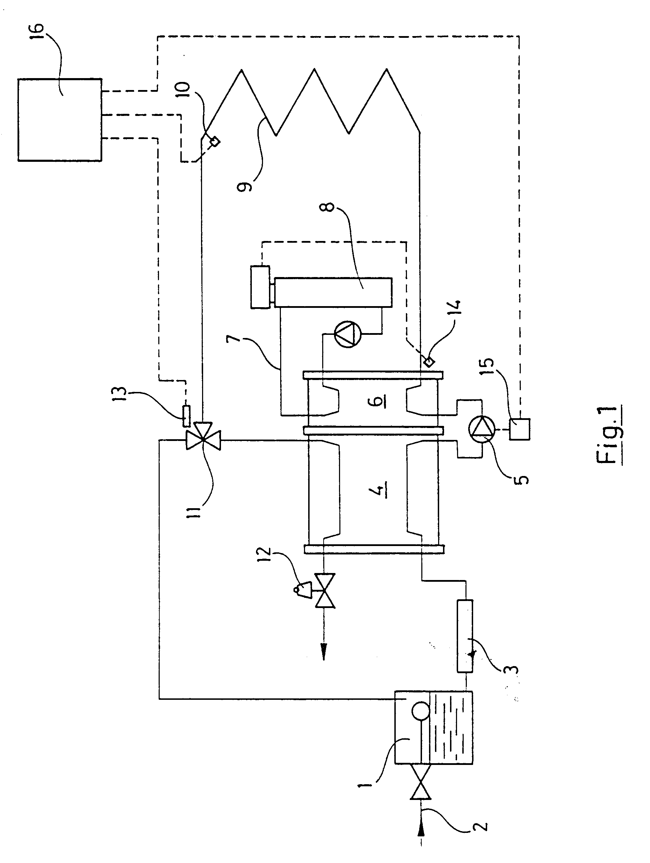

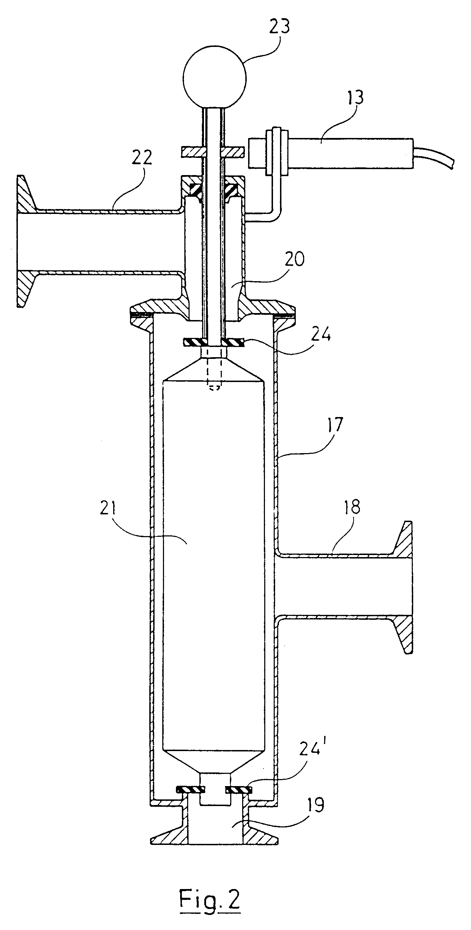

An apparatus according to the invention will now be described in more detail with reference to the attached drawings, in which fig 1 shows a plant for heat treatment of a food product in a regenerative heat exchanger with a three-way valve according to the invention, and fig 2 shows an embodiment of a three-way valve according to the invention.

In fig 1 there is shown a balance tank 1 provided with an inlet with a float valve for a food product 2. The food product is sucked from the balance tank through a disposable milk filter 3 to a regenerative heat exchanger, namely a plate heat exchanger 4, by means of a pump 5. In the plate heat exchanger the incoming food product flows in counter current to heat treated product, whereby the heat treated product is cooled and the incoming product is heated. The pump 5 is a positive pump, preferably an impeller pump, with a pump wheel of rubber. The food product is pumped further into a final heating step 6 in the heat exchanger. In this step the food product is heated to a desired high temperature by a heat transfer medium. The final heating step is advantageously carried out in a plate heat exchanger in which the food product is heated by means of a hot water. The water circulates in a special circuit 7 and is heated by electricity. From the final heating step the food product is led to a holding cell 9 which consists of a helicoidally wound tube. The holding cell is suitably built up of modules which are connected to provide the desired length. The food product passes through the holding cell 9 in an undisturbed rising flow. At the outlet of the holding cell the product temperature is sensed by means of a temperature sensor 10. At the outlet of the holding cell there is also a three-way valve 11, which, depending on the temperature which is sensed by the temperature sensor 10, alternatively returns the food product to the inlet of the heat exchanger or directs the product to pass through the regenerative section of the heat exchanger. The valve body in the three-way valve is moved manually to the normal operation position, i.e. to a position so that the food product which has been heat treated to the desired degree is directed to the regenerative section of the heat exchanger for the product to be cooled by incoming untreated product. At the outlet of the heat exchanger there is a counter pressure valve 12, which establishes a counter pressure determined by the weight of the valve body. The valve body of the three-way valve is maintained in its upper position, the operation position, by the pressure of the food product having passed through the three-way valve. The position of the valve body is sensed with an inductive sensor 13.

A temperature sensing means 14 is arranged at the outlet from the final heating stage in the heat exchanger. This sensor controls the heating of the hot water which circulates in the circuit 7. A relay 15 is arranged to start and to stop the pump 5. The signals from the temperature sensor 10 and the sensor 13 are fed to a control means 16 from which signals are supplied to the relay 15. The control means comprises a recorder and a limit value sensor.

In fig 2 there is shown a three-way valve according to the invention. The valve has a cylindrical valve housing 17 with an inlet 18 for incoming food product and two outlets 19 and 20. In the rest position the valve body of the valve 21 closes the outlet 19 and the product passes out through the outlet 20 and is directed through a connection 22. The valve body may be moved manually to its upper position, the operating position, by means of a knob 23 on the outside of the valve which is firmly connected to the valve body. The inductive transmitter 13 gives a signal when the valve body is in its lower position.

The valve body is provided with seals 24, 24' at its upper and lower ends.

When a food product is to be heat treated in the plant which is shown in fig 1 it is transported by the pump 5 into the regenerative section 4 of the heat exchanger and to the final heating stage 6. The valve body is then manually moved to its upper position by the operator and the food product is directed to pass through the regenerative section in the heat exchanger to be cooled by incoming product. The pressure of the food product having passed through the valve keeps the valve body in its upper position. If the temperature which is sensed by the temperature sensor 10 is too low, the control means 16 gives a signal to the pump to stop, so that flow to the valve 11 stops and the valve body returns to its lower position. When the valve body is in this lower position the position sensor 13 gives a signal to the control means 16 which starts the pump again, and the food product is returned to the balance tank 1. When the temperature of the product rises the flow through the holding cell will reach a sufficient high temperature again. When this is indicated by the temperature sensor 10, the operator lifts the valve body to its upper position and the product is once again led through the regenerative part of the heat exchanger and out from the plant.

With an arrangement of this kind, a very reliable plant is obtained, which effectively prevents product which is insufficiently heat treated passing out from the plant.

## Claims

1. An apparatus including a regenerative heat exchanger for heat treatment of liquid food products, and a holding cell (9) which the food product is heat treated for a predetermined time and temperature between a final heating stage (6) and a regenerative section (4) of the heat exchanger, **characterized in** that a three-way valve (11) is arranged at the outlet from the holding cell, which three-way valve is reversible between a stable rest position in which the food product is returned to the inlet of the heat exchanger and an operating position in which the food product is directed to the regenerative section of the heat exchanger, and the three way valve has a valve body (21) arranged to be moved manually to the operating position and to be kept in this position by the pressure of the food product having passed through the valve.

2. An apparatus according to claim 1, **characterized in** that the pressure of the food product is maintained by way of a pump arranged in front of the inlet to the final heating step (5).

3. An apparatus according to claims 1-2, **characterized in** that temperature sensing means (10) is arranged to sense the temperature at the outlet from the holding cell (9), and at too low a temperature of the food product, causes the pump (5) to stop for returning the three-way valve to the rest position and thereby causing food product to be returned to the inlet of the heat exchanger.

4. An apparatus according to any of claims 1-3, **characterized in** that said temperature sensing means is arranged to register the temperature continuously.

5. An apparatus according to any of claim 1-3, **characterized in** that the three-way valve is provided with means (13) arranged to sense the position of the valve body, for restarting the pump when the valve body has has returned to its rest position.

6. An apparatus according to claim 5, **characterized in** that said position sensing means (13) is arranged to stop the pump if the three-way valve is moved to the operating position at too low a temperature of the food product.

7. An apparatus according to claim 6, **characterized in** that said position sensing means (13) is arranged also to indicate the position of the valve body (21).

8. An apparatus according to claim 7, **characterized in** that said position sensing means (13) is arranged to continuously register the position of the valve body (21), and the temperature is registered by the temperature sensing means.

9. An apparatus according to claim 1-3, **characterized in** that a pressure regulating valve (12) is arranged at the outlet from the regenerative section of the heat exchanger for ensuring such a pressure level of the heat treated product that product, which has not yet been treated, cannot contaminate heat treated product if a leakage occurs in the regenerative section of the heat exchanger.

10. An apparatus according to claim 9, **characterized in** that the valve body (21) in the three-way valve is not maintained in operating position if said pressure level is not achieved.

## Patentansprüche

1. Vorrichtung mit einem regenerativen Wärmetauscher zur Wärmebehandlung flüssiger Nahrungsmittelprodukte und einer Haltezelle (9), bei der das Nahrungsmittelprodukt für vorbestimmte Dauer und bei vorbestimmter Temperatur zwischen einer abschließenden Erwärmungsstufe (6) und einem regenerativen Abschnitt (4) des Wärmetauschers wärmebehandelt wird, **dadurch gekennzeichnet**, daß am Ablauf der Haltezelle ein 3-Wege-Ventil (11) angeordnet ist, das zwischen einer stabilen Ruhestellung, in der das Nahrungsmittelprodukt zum Zulauf des Wärmetauschers zurückgeführt wird, und einer Arbeitsstellung umschaltbar ist, in der das Nahrungsmittelprodukt dem regenerativen Abschnitt des Wärmetauschers zugeführt wird, und daß das 3-Wege-Ventil ein Ventilelement (21) aufweist, das von Hand in die Arbeitsstellung bringbar und in dieser durch den Druck festhaltbar ist, den das durch das Ventil gelaufene Nahrungsmittelprodukt ausübt.

2. Vorrichtung nach Anspruch 1, **dadurch gekennzeichnet**, daß der Druck des Nahrungsmittelprodukts mittels einer Pumpe aufrechterhalten wird, die vor dem Zulauf zum abschließenden Erwärmungsschritt (5) angeordnet ist.

3. Vorrichtung nach Anspruch 1 - 2, **dadurch gekennzeichnet**, daß eine Temperaturfühleinrichtung (10) zum Erfassen der Temperatur am Ablauf der Haltezelle (9) vorgesehen ist und bei einer zu niedrigen Temperatur des Nahrungsmittelprodukts die Pumpe (5) stillsetzt, um das 3-Wege-Ventil in die Ruhestellung zurückzuschalten und so das Nahrungsmittelprodukt zum Zulauf des Wärmetauschers zurückzuführen.

4. Vorrichtung nach einem der Ansprüche 1 - 3, **dadurch gekennzeichnet**, daß die Temperaturfühleinrichtung eingerichtet ist, die Temperatur kontinuierlich zu registrieren.

5. Vorrichtung nach einem der Ansprüche 1 - 3, **dadurch gekennzeichnet**, daß daß das 3-Wege-Ventil mit einer Einrichtung (13) versehen ist, die die Stellung des Ventilelements erfaßt, um die Pumpe wieder anzulassen, wenn das Ventilelement in seine Ruhestellung zurückgekehrt ist.

6. Vorrichtung nach Anspruch 5, **dadurch gekennzeichnet**, daß die Stellungserfassungseinrichtung (13) so eingerichtet ist, daß sie die Pumpe stillsetzt, wenn das 3-Wege-Ventil bei einer zu niedrigen Temperatur des Nahrungsmittelprodukts in die Arbeitsstellung geschaltet wird.

7. Vorrichtung nach Anspruch 6, **dadurch gekennzeichnet**, daß die Stelungserfassungseinrichtung (13) so eingerichtet ist, daß sie die Stellung des Ventilelements (21) auch anzeigt.

8. Vorrichtung nach Anspruch 7, **dadurch gekennzeichnet**, daß die Stellungserfassungseinrichtung (13) so eingerichtet ist, daß sie die Stellung des Ventilelements (21) kontinuierlichregistriert, und daß die Temperaturfühleinrichtung die Temperatur registriert.

9. Vorrichtung nach Anspruch 1 - 3, **dadurch gekennzeichnet**, daß am Ablauf des regenerativen Abschnitts des Wärmetauschers ein Druckregelventil (12) angeordnet ist, um ein solches Druckniveau des wärmebehandelten Produkts zu gewährleisten, daß bei einem Leck im regenerativen Abschnitt des Wärmetauschers noch nicht behandeltes Produkt das wärmebehandelte Produkt nicht verunreinigen kann.

10. Vorrichtung nach Anspruch 9, **dadurch gekennzeichnet**, daß das Ventilelement (21) im 3-Wege-Ventil nicht in seiner Arbeitsstellung gehalten wird, wenn das genannte Druckniveau nicht erreicht ist.

## Revendications

1. Dispositif comprenant un échangeur de chaleur à régénération destiné au traitement thermique des produits alimentaires liquides, et une cellule de maintien (9) dans laquelle le produit alimentaire est traité de manière thermique pendant une durée et à une température prédéterminées entre un niveau de chauffage thermique (6) final et une section à régénération (4) de l'échangeur de chaleur, caractérisé en ce qu'un distributeur à trois voies (11) est agencé à la sortie de la cellule de maintien, lequel distributeur à trois voies peut passer d'une position de repos stable dans laquelle le produit alimentaire est renvoyé à l'admission de l'échangeur de chaleur à une position de fonctionnement dans laquelle le produit alimentaire est dirigé vers la section à régénération de l'échangeur de chaleur, et le distributeur à trois voies a un corps de distributeur (21) agencé pour être déplacé manuellement en position de fonctionnement et pour être maintenu dans cette position par la pression du produit alimentaire qui est passé à travers le distributeur.

2. Dispositif selon la revendication 1, caractérisé en ce que la pression du produit alimentaire est maintenue au moyen d'une pompe agencée à l'avant de l'admission jusqu'au niveau de chauffage (6) final.

3. Dispositif selon les revendications 1 et 2, caractérisé en ce que des moyens capteurs de température (10) sont agencés pour détecter la température à la sortie de la cellule de maintien (9), et à une température trop basse du produit alimentaire, entraînent l'arrêt de la pompe pour ramener le distributeur à trois voies en position de repos et entraînant ainsi le renvoi du produit alimentaire vers l'admission de l'échangeur de chaleur.

4. Dispositif selon l'une quelconque des revendications 1 à 3, caractérisé en ce que lesdits moyens capteurs de température sont agencés pour enregistrer la température en continu.

5. Dispositif selon l'une quelconque des revendications 1 à 3, caractérisé en ce que le distributeur à trois voies est équipé de moyens (13) agencés pour détecter la position du corps de distributeur, pour redémarrer la pompe lorsque le corps de distributeur est revenu à sa position de repos.

6. Dispositif selon la revendication 5, caractérisé en ce que lesdits moyens capteurs de position (13) sont agencés pour arrêter la pompe si le distributeur à trois voies est déplacé en position de fonctionnement à une température trop basse du produit alimentaire.

7. Dispositif selon la revendication 6, caractérisé en ce que lesdits moyens capteurs de position (13) sont également agencés pour indiquer la position du corps de distributeur (21).

8. Dispositif selon la revendication 7, caractérisé en ce que lesdits moyens capteurs de position (13) sont agencés pour enregistrer en continu la position du corps de distributeur (21), et la température est aussi enregistrée par les moyens capteurs de température.

9. Dispositif selon les revendications 1 à 3, caractérisé en ce qu'une soupape de régulation de pression (12) est agencée à la sortie de la section à régénération de l'échangeur de chaleur pour assurer un niveau de pression du produit traité de manière thermique tel que du produit qui n'a pas encore été traité ne puisse pas contaminer le produit traité de manière thermique si une fuite survient dans la section à régénération de l'échangeur de chaleur.

10. Dispositif selon la revendication 9, caractérisé en ce que le corps de distributeur (21) dans le distributeur à trois voies n'est pas maintenu en position de fonctionnement si ledit niveau de pression n'est pas atteint.
